# EUROPÄISCHE PATENTSCHRIFT

(11) **EP 0 826 570 B1**
(45) Veröffentlichungstag und Bekanntmachung des Hinweises auf die Patenterteilung: **01.08.2001**
(21) Anmeldenummer: 97114232.8
(22) Anmeldetag: 18.08.1997
(51) Int. Cl.: B61D 17/06, B61D 17/02, B61G 7/10

(54) **Horizontal verschwenkbare Abdeckung für eine Durchtrittsöffnung in einer Stirnseite eines Schienenfahrzeuges für eine Mittelpufferkupplung**
Horizontally swivelling covering for an aperture in a front end of a railway vehicle for a central buffer coupling
Couverture pivotante horizontalement pour une ouverture dans la face frontale d'un véhicule ferroviaire pour un attelage à tampon central

(30) Priorität: 31.08.1996 DE 19635382
(43) Veröffentlichungstag der Anmeldung: 04.03.1998
(73) Patentinhaber: ALSTOM LHB GmbH, 38239 Salzgitter (DE)
(72) Erfinder: Döhring, Uwe, Dipl.-Ing., 38304 Wolfenbüttel (DE)

(56) Entgegenhaltungen:
- DE-A- 4 300 393
- DE-A- 4 312 405
- DE-C- 4 445 182

## Beschreibung

Die Erfindung betrifft ein Schienenfahrzeug mit einer Mittelpufferkupplung und einer horizontal verschwenkbaren Abdeckung für eine Durchtrittsöffnung für die Mittelpufferkupplung in einer Stirnseite des Schienenfahrzeuges nach dem Oberbegriff des Anspruchs 1.

Abdeckungen für Kupplungen für Schienenfahrzeuge, insbesondere für Stadtbahnen, die auch auf öffentlichen Straßen verkehren, sollen so gestaltet sein, daß Verletzungen von Personen und Schäden an anderen Fahrzeugen bei einem Zusammenprall möglichst gering gehalten werden.

Bei Schienenfahrzeugen, insbesondere Hochgeschwindigkeitsfahrzeugen, ist es bekannt, eine aus der Stirnseite des Fahrzeuges herausragende Mittelpufferkupplung und deren Freiraum im Stirnseitenbereich durch eine der Form der äußeren Kontur angepaßten Haube aus glasfaserverstärktem Kunststoff oder aus Metall abzudecken. Eine derartige Abdeckung der Mittelpufferkupplung würde zwar auch bei langsam fahrenden Schienenfahrzeugen des Nahverkehrs bei Unfällen besseren Schutz gegen Verletzungen und großen Beschädigungen bieten, sie kann aber entweder nur manuell und bei stehendem Fahrzeug entfernt werden (beim ICE) oder mit einem zusätzlichen aufwendigen Stellantrieb betätigt werden (beim ICE 2). Als nachteilig für die Aerodynamik und als Gefährdungspotenzial erweist sich bei geöffneter Stellung die relativ große Öffnung in der Stirnseitenverkleidung.

Aus der DE 43 00 393 A1 ist eine linear in Fahrzeuglängsrichtung verschiebbare Fronthaube für Schienenfahrzeuge, insbesondere für Hochgeschwindigkeitsfahrzeuge bekannt, innerhalb der die Kupplungsvorrichtung angeordnet ist. In Ruhestellung befindet sich die Fronthaube in ihrer vorderen Endlage und deckt die Kupplungsvorrichtung vollständig ab. In Gebrauchsstellung ist die Fronthaube mit Lineargetrieben in das Innere des Fahrzeugs längsverschoben, bis die am Fahrzeug befestigte Kupplungsvorrichtung offenliegt und funktionsgerecht arbeiten kann. Dazu weist die Fronthaube ein verschließbares Fenster zum Durchtritt der Kupplungsvorrichtung auf. Das Untergestell ist durch die Fronthaube sowohl als auch in der vorgeschobenen als auch in der zurückgeschobenen Stellung abgedichtet.

Bei dieser Abdeckung ist zwar bei vorgeschobener Stellung der Kupplung eine Abdichtung der neben dem Durchtrittsfenster liegenden Stirnseitenbereichen vorgesehen, jedoch nur im Rahmen des betriebsnotwendigen Freiraumes für den horizontalen Schwenkbereich für die Kupplungsvorrichtung. Bei Stadtbahnwagen ist aber ein relativ großer horizontaler Schwenkbereich von ca. +/- 40 ° erforderlich, so daß größere ungeschützte Bereiche in der Abdeckung der Stirnseite vorhanden wären.

Aus der DE 43 12 405 A1 ist eine horizontal verschiebbare Schutzvorrichtung der gattungsgemäßen Art bekannt, die seitlich am Kupplungskopf angeordnet ist. Dabei ist seitlich am Kupplungskopf je ein Schutzbügel angebaut, der über eine lange Abstützstange gelenkig mit dem Untergestell des Schienenfahrzeuges verbunden ist. Beim horizontalen Verschwenken der Mittelpufferkupplung werden die Schutzbügel ausbildungsgemäß weit aus dem Fahrzeugprofil herausgeführt. Dies kann einerseits zu Beschädigungen und zu Behinderungen der Schutzvorrichtung selbst führen und andererseits erhöht dies die Unfallgefahr. Um das vertikale Auslenken der Kupplung nicht zu behindern, kann der Schutzbügel nur eine begrenzte Höhe aufweisen. Bei größerer Höhenerstreckung der Schutzbügel besteht die Gefahr, daß diese gegen die Fahrzeugverkleidung stoßen. Die Durchtrittsöffnung kann daher mit den Schutzbügeln in vertikaler Erstreckung nicht ausreichend abgedeckt werden.

Der Erfindung liegt daher die Aufgabe zugrunde, ein Schienenfahrzeug mit einer Mittelpufferkupplung und einer horizontal verschwenkbaren Abdeckung für eine Durchtrittsöffnung für die Mittelpufferkupplung in einer Stirnseite des Schienenfahrzeuges derart zu verbessern, daß ein Ausschwenken der Abdeckung aus dem Fahrzeugprofil vermieden, eine relativ kurze Einbautiefe in Fahrzeuglängsrichtung im Stirnseitenbereich ermöglicht wird und eine ständige Kuppelbereitschaft gegeben ist.

Diese Aufgabe wird durch das im Anspruch 1 gekennzeichnete Schienenfahrzeug gelöst.

Vorteilhafte Weiterbildungen der Erfindung sind in den Unteransprüchen angegeben.

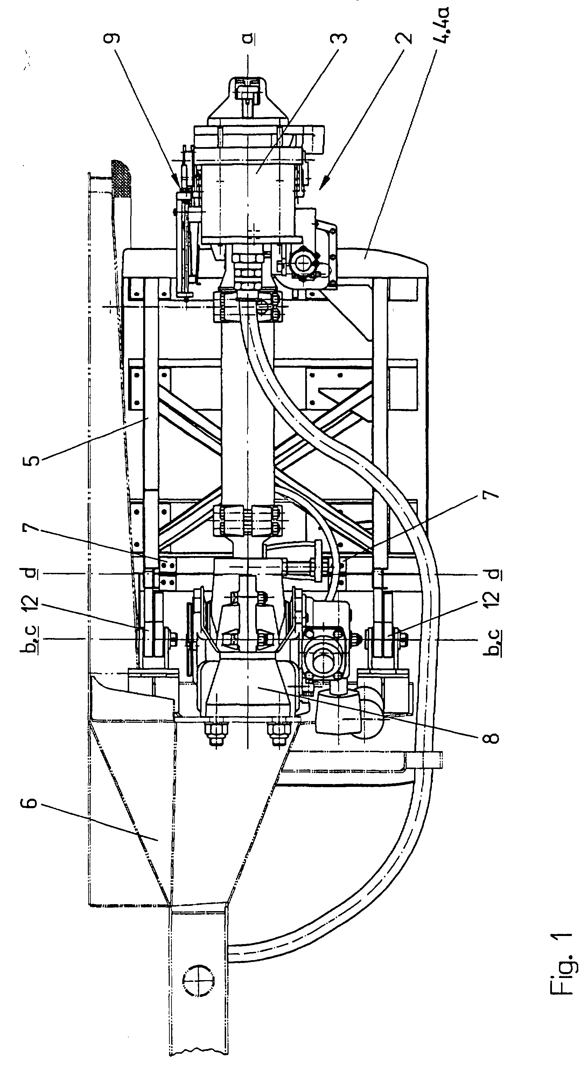

Die Erfindung ist nachstehend mit Bezug auf die Zeichnung an einem Ausführungsbeispiel näher erläutert. Es zeigen
- Fig. 1: einen teilweisen Schnitt des Kopfbereiches im Unterstell eines Schienenfahrzeugs mit Abdeckung und Mittelpufferkupplung in Seitenansicht;

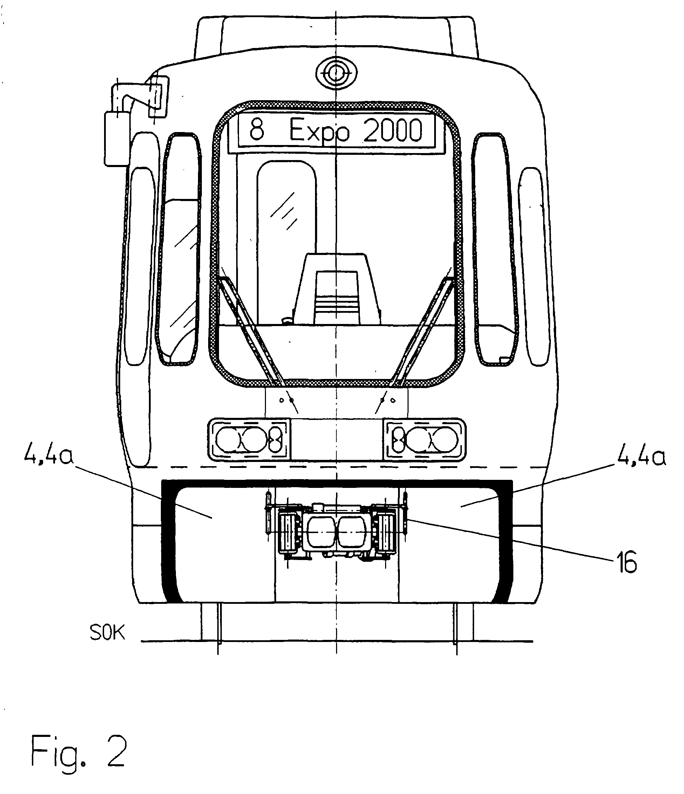

- Fig. 2: eine Vorderansicht des Schienenfahrzeuges gemäß Fig. 1 mit Abdeckung;

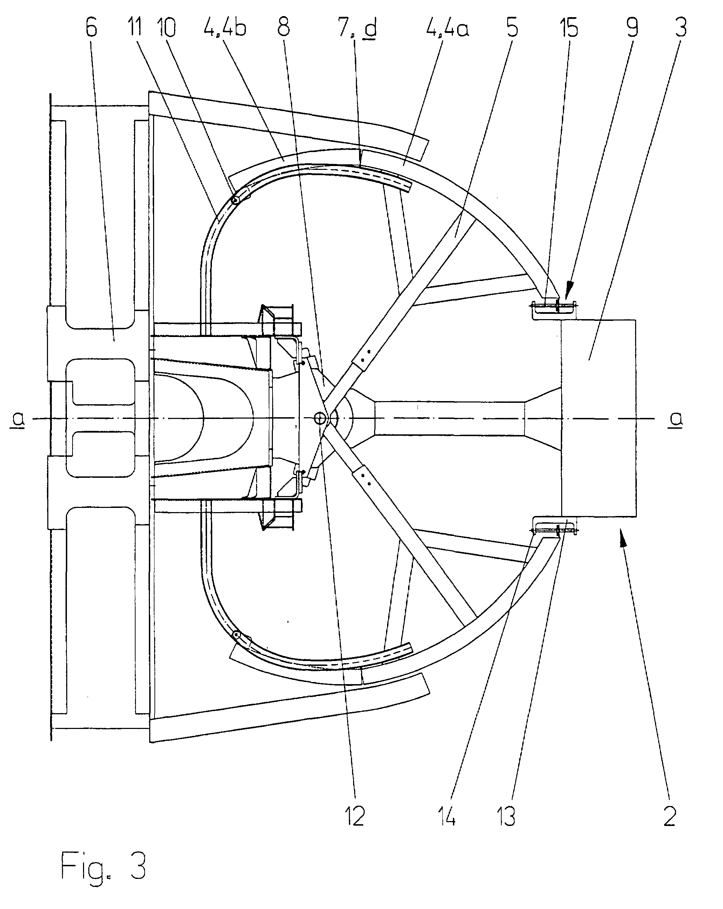

- Fig. 3: einen teilweisen Schnitt des Kopfbereiches des Schienenfahrzeuges in Draufsicht von oben;

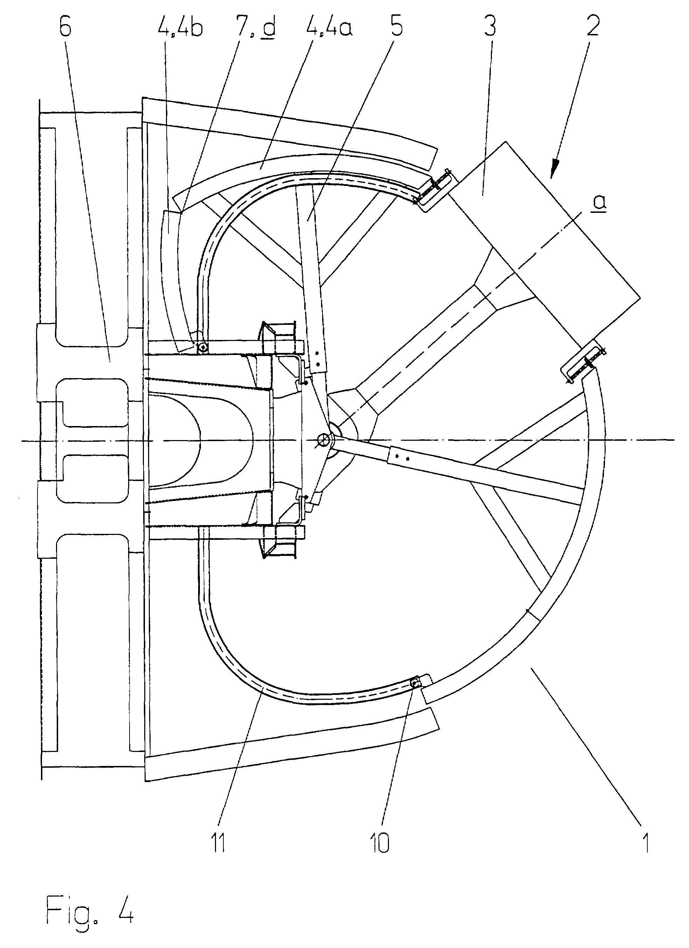

- Fig. 4: den teilweisen Schnitt nach Fig. 3 in Draufsicht von oben mit verschwenkter Mittelpufferkupplung.

An einem Schienenfahrzeug ist an der Stirnseite eine horizontal verschwenkbare Abdeckung angeordnet, die eine Durchtrittsöffnung 1 für eine Mittelpufferkupplung 2 abdeckt. Die Abdeckung selbst weist zwei beiderseits am Kupplungskopf 3 mittels Führung 9 befestigte Abdeckelemente 4 auf, die jeweils mit einer Abstützstange 5 am Untergestell 6 des Schienenfahrzeugs befestigt und zusammen mit der im Lager 8 angelenkten Mittelpufferkupplung 2 horizontal schwenkbar am Untergestell 6 gehalten sind.

Jedes Abdeckelement 4 besteht aus zwei Abdecksegmenten, einem vorderem Abdecksegment 4a und einem hinteren Abdecksegment 4b, die mittels eines Gelenks 7 mit senkrechter Schwenkachse d verbunden sind.

Das hintere Abdecksegement 4b ist gegenüber dem vorderen Abdecksegment 4a-im Sinne einer Verkürzung des gesamten Abdeckelementes 4 in Fahrzeuglängsrichtung - verschwenkbar. Dadurch ist für die ausgelenkte Mittelpufferkupplung 2 bzw. für das in Fahrzeuglängsrichtung eingeschwenkte Abdeckelement 4 eine geringe Einbautiefe in Fahrzeuglängsrichtung ausreichend.

Zwischen dem vorderem Abdecksegement 4a und dem Kupplungskopf 3 ist eine Führung 9 angeordnet, die im betriebsnotwendigen Umfang einen ungehinderten Zug- und Druckhub und vertikale Ausschläge der Mittelpufferkupplung 2 sowie Torsion um die Kuppelachse a zuläßt. Die Abdeckelemente 4 sind innerhalb des Fahrzeugprofils verschwenkbar angeordnet und überragen das Fahrzeugprofil auch in verschwenkter, seitlicher Endlage nicht.

Das hintere Abdecksegment 4b weist am hinteren Ende ein Führelement 10 auf, z.B. eine Rolle, das in einer am Untergestell 6 befestigten Führungsbahn 11 geführt ist.

Die senkrechten Schwenkachsen b der Schwenklager 12 für die Abstützstangen 5 bzw. die Abdeckelemente 4 fluchten, d. h. sie sind identisch mit der Schwenkachse c des Lagers 8 der Mittelpufferkupplung 2. Dadurch bewegen sich die vorderen Abdecksegmente 4a zwischen den beiden Endlagen auf einer Kreisbahn mit konstantem Radius. Durch eine Veränderung der Bogenlängen der vorderen und hinteren Abdecksegmente 4a, 4b, d. h. durch Veränderung der Teilung, und/oder durch Variation der Radien der Führungsbahn 11 lassen sich unterschiedliche Horizontalauslenkungen für die Mittelpufferkupplung 3 verwirklichen. Durch Verschieben der Schwenkachse b der Abdeckelemente 4 und/oder durch Ausbildung einer Exzentrizität am Schwenklager 12 läßt sich der beim Fluchten der Schwenkachsen b und c konstante Rücksprung zwischen den Abdeckelementen 4 und der Fahrzeugverkleidung variieren.

Die Führungsbahn 11 und das Führelement 10 tragen auch zur Versteifung der Abdeckelemente 4 bei, da das hintere Abdecksegment 4b nur gegen die durch die Führungsbahn 11 und das Führelement 10 gebildete, widerstandsfähige Abstützung eindrückbar ist.

Die Führungsbahn 11 und das Führelement 10 sind derart ausgebildet und angeordnet, daß beim Rückschwenken eines Abdeckelementes 4 aus der verschwenkten Endlage der Spalt zwischen dem vorderen Abdecksegments 4a und dem hinteren Abdecksegments 4b geschlossen wird, bevor dieses aus der Fahrzeugverkleidung heraustritt. Auch zwischen der Seitenwand der Fahrzeugverkleidung und den Abdeckelementen 4 entstehen bei keinem betrieblich vorkommenden Ausschwenkwinkel der Mittelpufferkupplung Spalte oder andere Öffnungen, die eine zusätzliche Unfallgefahr, auch nicht für das Werkstattpersonal, darstellen.

Die Führung 9 zwischen Kupplungskopf 3 und vorderem Abdecksegement 4a ist durch ein am Kupplungskopf 3 starr befestigtes und horizontal angeordnetes Gabelstück 13 gebildet. Die beiden Gabelzinken 14 des Gabelstücks 13 weisen zum vorderen Abdecksegment 4a. Zwischen den Gabelzinken 14 ist eine Stange 15 angeordnet, die gegenüber dem vorderen Ende des vorderen Abdecksegments 4a in Richtung der Kuppelachse a verschieblich und um diese verschwenkbar sowie senkrecht zur Kuppelachse a vertikal relativ zum Abdecksegment 4a verschieblich aber horizontal formschlüssig wirkend mit diesem verbunden ist.

Um vertikale Ausschläge der Mittelpufferkupplung 2 gegenüber den Abdeckelementen 4 zu ermöglichen, weist das Ende der vorderen Abdecksegmente 4a ein senkrechtes Langloch 16 auf, in das die Stange 15 eingreift.

Um die Zugänglichkeit des Fahrzeugkopfes von unten weiterhin zu gewährleisten, sind das Gabelstück 13, die Stange 15 sowie die Führungsbahn 11 und das Führelement 10 so ausgeführt, daß jederzeit eine Trennung der Abdeckelemente 4 von der Mittelpufferkupplung 2 von außen möglich ist und die beiden Abdeckelemente 4 unabhängig von der Mittelpufferkupplung 2 einzeln nach hinten verschwenkbar sind.

Die seiten- und höhenmäßige Erstreckung der Durchtrittsöffnung 1 ergibt sich aus den zu verwirklichenden horizontalen und vertikalen Auslenkungen der Mittelpufferkupplung 2. Übliche von den Betreibern geforderte Schwenkwinkel betragen horizontal etwa +/- 35° bis 45° und vertikal etwa +/- 4° bis 8°.

Anstelle der gegeneinander verschwenkbaren Abdecksegmente 4a und 4b sind auch gegeneinander verschiebbare Abdeckelemente 4a und 4b denkbar (Teleskopsystem). In der Praxis zeigt es sich jedoch, daß derartige Ausbildungen vor allem im Winterbetrieb störanfällig sind.

Durch die vorstehend beschriebene Ausbildung der Abdeckung ist die Mittelpufferkupplung ständig betriebsbereit und die Durchtrittsöffnung 1 in jeder Stellung der Mittelpufferkupplung seitlich immer vollständig abgedeckt. Dadurch sind unterschiedliche Fahrzeugzusammenstellungen während des Betriebseinsatzes einfach, schnell und sicher herstellbar.

### Bezugszeichenliste

- 1: Durchtrittsöffnung
- 2: Mittelpufferkupplung
- 3: Kupplungskopf
- 4: Abdeckelement
- 4a: vorderes Abdecksegment
- 4b: hinteres Abdecksegment
- 5: Abstützstange
- 6: Untergestell
- 7: Gelenk
- 8: Lager
- 9: Führung
- 10: Führelement
- 11: Führungsbahn
- 12: Schwenklager
- 13: Gabelstück
- 14: Gabelzinke
- 15: Stange
- 16: Langloch
- a: Kuppelachse
- b: Schwenkachse des Schwenklagers 12
- c: Schwenkachse der Mittelpufferkupplung
- d: Schwenkachse des Gelenks 7

## Patentansprüche

1. Schienenfahrzeug mit einer Mittelpufferkupplung (2) und einer horizontal verschwenkbaren Abdeckung für eine Durchtrittsöffnung (1) für die Mittelpufferkupplung (2) in einer Stirnseite des Schienenfahrzeugs mit zwei beiderseits am Kupplungskopf (3) befestigten Abdeckelementen, (4) die jeweils mit einer Abstützstange (5) am Untergestell (6) des Schienenfahrzeugs gelenkig befestigt und zusammen mit der Mittelpufferkupplung (2) horizontal schwenkbar am Untergestell (6) gehalten sind, **dadurch gekennzeichnet,** daß jedes Abdeckelement (4) zweiteilig mit vorderem Abdecksegment (4a) und hinterem Abdecksegment (4b) ausgebildet ist und beide Abdecksegmente (4a, 4b) mittels eines Gelenks (7) mit senkrechter Schwenkachse (d) verbunden sind, daß die Abdeckelemente (4) innerhalb des Fahrzeugprofils verschwenkbar ausgebildet sind, daß das hintere Abdecksegment (4b) gegenüber dem vorderen Abdecksegment (4a), im Sinne einer Verkürzung des gesamten Abdeckelementes (4) in Fahrzeuglängsrichtung, verschwenkbar ist und daß zwischen dem vorderen Abdecksegment (4a) und dem Kupplungskopf (3) eine Führung (9) angeordnet ist, die im betriebsnotwendigen Rahmen einen ungehinderten Zugund Druckhub und vertikale Auslenkungen der Mittelpufferkupplung (2) sowie Torsion um die Kuppelachse (a) zuläßt.

2. Schienenfahrzeug nach Anspruch 1, **dadurch gekennzeichnet,** daß das hintere Abdecksegment (4b) am hinteren Ende ein Führelement (10) aufweist, das in einer am Untergestell (6) befestigten Führungsbahn (11) geführt ist.

3. Schienenfahrzeug nach Anspruch 1 oder 2, **dadurch gekennzeichnet,** daß die Schwenkachsen (b) der Schwenklager (12) für die Abdeckelemente (4) mit der Schwenkachse (c) des Lagers (8) der Mittelpufferkupplung (2) fluchten.

4. Schienenfahrzeug nach einem der Ansprüche 1 bis 3, **dadurch gekennzeichnet,** daß die Führung (9) zwischen Kupplungskopf (3) und vorderem Abdecksegement (4a) durch ein am Kupplungskopf (3) starr befestigtes und horizontal angeordnetes Gabelstück (13) gebildet ist, dessen beide Gabelzinken (14) zum vorderen Abdecksegement (4a) weisen, wobei zwischen den Gabelzinken (14) eine Stange (15) angeordnet ist, die gegenüber dem vordere Ende des vorderen Abdecksegments (4a) in Richtung der Kuppelachse (a) verschieblich und um diese schwenkbar sowie senkrecht zur Kuppelachse (a) vertikal relativ zum Abdecksegment (4a) verschieblich aber horizontal formschlüssig wirkend mit diesem verbunden ist.

5. Schienenfahrzeug nach Anspruch 4, **dadurch gekennzeichnet,** daß das Ende des vorderen Abdecksegments (4a) ein senkrechtes Langloch (16) aufweist, in das die Stange (15) greift.

## Claims

1. Rail vehicle with a central buffer coupling (2) and a horizontally swivelling cover for an opening (1) for passage of the central buffer coupling (2) in an end side of the rail vehicle with two covering elements (4) which are fixed on both sides to the coupling head (3) and are each hinged with a supporting bar (5) to the sub-frame (6) of the rail vehicle and are held swivellable horizontally together with the central buffer coupling (2) on the sub-frame (6), characterised in that each covering element (4) is made in two parts with a front covering segment (4a) and a rear covering segment (4b) and both covering segments (4a, 4b) are connected by means of a hinge (7) with a vertical swivelling axis (d), in that the covering elements (4) are formed so that they are swivellable inside the vehicle profile, in that the rear covering segment (4b) is swivellable in relation to the front covering segment (4a), shortening the overall covering element (4) in the longitudinal direction of the vehicle, and in that there is a guide (9) which is arranged between the front covering segment (4a) and the coupling head (3) and when required in operation allows unhindered pulling and pushing movements and vertical deflections of the central buffer coupling (2) and torsion about the coupling axis (a).

2. Rail vehicle according to claim 1, characterised in that at the rear end the rear covering segment (4b) exhibits a guide element (10) which is guided in a guide track (11) fixed to the sub-frame (6).

3. Rail vehicle according to claim 1 or 2, characterised in that the swivelling axes (b) of the swivel mountings (12) for the covering elements (4) are aligned with the swivelling axis (c) of the mounting (8) of the central buffer coupling (2).

4. Rail vehicle according to one of claims 1 to 3, characterised in that the guide (9) between the coupling head (3) and the front covering segment (4a) is formed by a forked part (13) which is fixed rigidly to the coupling head (3) and arranged horizontally and the two fork prongs (14) of which point towards the front covering segment (4a), and between the fork prongs (14) there is a bar (15) which is displaceable relative to the front end of the front covering segment (4a) in the direction of the coupling axis (a) and swivellable around the latter and displaceable perpendicularly to the coupling axis (a) in a vertical direction relative to the covering segment (4a) but connected in a horizontally form locking manner with the latter.

5. Rail vehicle according to claim 4, characterised in that the end of the front covering segment (4a) exhibits a vertical slot (16) in which the bar (15) engages.

## Revendications

1. Véhicule ferroviaire pourvu d'un attelage à tampon central (2) et d'un recouvrement pivotant horizontalement pour une ouverture de passage (1) prévue pour ledit attelage (2), dans un côté frontal du véhicule ferroviaire, lequel recouvrement comporte deux éléments de recouvrement (4) qui sont fixés de part et d'autre de la tête d'attelage (3), qui sont fixés de manière articulée au châssis (6) du véhicule ferroviaire à l'aide de barres de support respectives (5) et qui sont montés sur le châssis (6) de manière à pouvoir pivoter horizontalement avec l'attelage à tampon central (2), **caractérisé** en ce que chaque élément de recouvrement (4) est en deux parties et comprend un segment avant (4a) et un segment arrière (4b) et ces deux segments (4a, 4b) sont reliés à l'aide d'une articulation (7) pourvue d'un axe de pivotement vertical (d), en ce que les éléments de recouvrement (4) sont conçus pour pouvoir pivoter à l'intérieur du profil de véhicule, en ce que le segment de recouvrement arrière (4b) est apte à pivoter par rapport au segment de recouvrement avant (4a) dans le sens d'un raccourcissement de tout l'élément de recouvrement (4) dans le sens longitudinal du véhicule, et en ce qu'il est prévu entre le segment de recouvrement avant (4a) et la tête d'attelage (3) un guidage (9) qui autorise dans le cadre nécessaire au fonctionnement une course de traction-compression non entravée et des déviations verticales de l'attelage à tampon central (2) ainsi qu'une torsion autour de l'axe d'attelage (a).

2. Véhicule ferroviaire selon la revendication 1, **caractérisé** en ce que le segment de recouvrement arrière (4b) comporte à son extrémité arrière un élément de guidage (10) qui est guidé dans une glissière de guidage (11) fixée au châssis (6).

3. Véhicule ferroviaire selon la revendication 1 ou 2, **caractérisé** en ce que les axes de pivotement (b) des paliers de pivotement (12) prévus pour les éléments de recouvrement (4) se trouvent dans l'alignement de l'axe de pivotement (c) du palier (8) de l'attelage à tampon central (2).

4. Véhicule ferroviaire selon l'une des revendications 1 à 3, **caractérisé** en ce que le guidage (9) prévu entre la tête d'attelage (3) et le segment de recouvrement avant (4a) est défini par une pièce en forme de fourche (13) qui est fixée rigidement à la tête d'attelage (3) et disposée à l'horizontale, et dont les deux dents (14) sont dirigées vers le segment de recouvrement avant (4a), étant précisé qu'il est prévu entre les dents (14) une barre (15) qui est mobile par rapport à l'extrémité avant du segment de recouvrement avant (4a), dans le sens de l'axe d'attelage (a), et qui est apte à pivoter autour dudit axe (a) ainsi que perpendiculairement à celui-ci, verticalement par rapport au segment (4a), mais qui est reliée à celui-ci avec une action par complémentarité de forme horizontale.

5. Véhicule ferroviaire selon la revendication 4, **caractérisé** en ce que l'extrémité du segment de recouvrement avant (4a) présente un trou oblong vertical (16) dans lequel pénètre la barre (15).
